# EUROPEAN PATENT SPECIFICATION

(11) **EP 3 033 541 B1**
(45) Date of publication and mention of the grant of the patent: **16.01.2019**
(21) Application number: 14844759.2
(22) Date of filing: 11.09.2014
(51) Int. Cl.: F16F 7/12, B32B 5/02, B32B 25/10, B32B 3/16, B32B 3/20, A47C 27/00, A42B 3/12, B29D 22/00, B32B 7/06

(54) **LINKED ARRAYS OF VOID CELLS**
VERKNÜPFTE ANORDNUNGEN AUS HOHLEN ZELLEN
GROUPEMENTS RELIÉS DE CELLULES VIDES

(30) Priority: 11.09.2013 US 201361876648 P
(43) Date of publication of application: 22.06.2016
(73) Proprietor: Skydex Technologies, Inc., Centennial, CO 80112 (US)
(72) Inventor: TRESSO, Rico, Castle Rock, Colorado 80109 (US); WYMAN, Ethan, Lakewood, Colorado 80228 (US); METZER, Collin, Castle Pines, Colorado 80108 (US); FOLEY, Peter M., Castle Rock, Colorado 80108 (US); DIFELICE, Eric, Parker, Colorado 80134 (US)
(74) Representative: Style, Kelda Camilla Karen
(86) International application number: PCT/US2014/055235
(87) International publication number: WO 2015/038804

(56) References cited:
- WO-A2-2012/170665
- JP-A- H0 274 755
- JP-A- H0 495 626
- JP-A- H0 682 451
- JP-A- H04 113 040
- JP-A- 2000 356 245
- US-A1- 2007 147 956
- US-A1- 2013 133 138

## Description

### Technical Field

This invention relates generally to an array of individually formed void cells linked together and methods of manufacturing the same.

### Background

Sheets of protruding resiliently compressible void cells are used in cushioning, impact protection, vibration dampening, and/or other applications. For example, a cushioning system may be placed adjacent to a portion of the body to provide a barrier between the body and one or more objects that would otherwise impinge on the body producing a negative effect such as a pressure concentration, an impact force, or a vibration. A pocketed spring mattress contains an array of cells or springs that cushion the body from a bed frame, reducing pressure concentrations. Similarly, chairs, gloves, knee-pads, helmets, etc. may include a cushioning system that provides a barrier between a portion of the body and one or more objects.

US2013/133138A1 discloses a cellular cushioning system includes cells or support units arranged in one or more stacked arrays. The cells are hollow chambers that resist deflection due to compressive forces, similar to compression springs. The arrays are attached to one or more intermedial binding layers. The intermedial binding layer(s) links the cells together while allowing the cells to deform independently of one another. An external load compresses of one of the void cells within an independent compression range without significantly compressing at least one void cell adjacent the compressed void cell. The independent compression range is the displacement range of the compressed void cell that does not significantly affect the compression of adjacent void cells. If the void cell is compressed beyond the independent compression range, the intermedial binding layers may be deflected and/or the void cells adjacent the compressed void cell may be compressed.

### Summary

Implementations described and claimed herein include methods of manufacturing related to a spaced array of individually formed void cells, which are linked together. The void cells are protruding, resiliently compressible cells manufactured by thermoforming, extrusion, injection molding, laminating, and/or blow molding processes. The individual void cells are molded and arranged in an array. A separate, porous binding layer is attached to the individual void cells in the array. The separate porous binding layer permits fluid flow between adjacent individual void cells. A material forming the individual void cells differs from a material forming the separate porous binding layer. In one implementation, two arrays may comprised of linked individually formed void cells, wherein each array is aligned with the other array, the linked individually formed void cells of one array are positioned opposite the linked individually formed void cells of the other array, sharing the same binding layer. In another implementation, multiple arrays can be stacked upon one another. In another implementation, the linked individually formed void cells have substantially different force-deflection characteristics.

This Summary is provided to introduce an election of concepts in a simplified form that are further described below in the Detailed Description. This Summary is not intended to identify key features or essential features of the claimed subject matter, nor is it intended to limit the scope of the claimed subject matter. Other features, details, utilities, and advantages of the claimed subject matter will be apparent from the following more particular written Detailed Description of various implementations and implementations as further illustrated in the accompanying drawings and defined in the appended claims.

### Brief Descriptions of the Drawings

FIG. 1 illustrates a top plan view of an example linked array of individual void cells.
FIG. 2 illustrates a bottom perspective view of an example linked array of individual void cells.
FIG. 3 illustrates a top perspective view of an example linked system of individual opposing void cells.
FIG. 4 illustrates a side perspective view of an example linked system of individual opposing void cells.
FIG. 5 illustrates a bottom plan view of an example linked array of individual void cells having varying force-deflection characteristics.
FIG. 6 illustrates a bottom perspective view of an example linked array of individual void cells.
FIG. 7 illustrates example operations for manufacturing a linked array of void cells.

### Detailed Descriptions

Sheets of protruding resiliently compressible void cells are typically manufactured by forming the void cells in a planar sheet using thermoforming and/or blow molding processes. The cells are directly coupled together or one or more unifying layers are used to couple each of the cells together at their extremities. However, there are limitations to the resulting geometry when using thermoforming and/or blow molding processes to form the sheet of protruding void cells.

For example, each of the individual void cells and the layer binding the void cells together are inherently made of the same material because they are formed from the same sheet of base material. Because thermoforming and/or blow molding processes stretch the base material to form the sheets of void cells, the thickness of the void cell walls inherently vary, becoming thinner away from the binding layer. Further, the spacing between the individual void cells in the sheet of protruding void cells is limited to a minimum value defined by the manufacturing process used to form the sheet of protruding void cells.

Additionally, while directly coupling the cells together or indirectly coupling the extremities of the cells together is effective in tying the cushioning system together, the independence of each of the cells is reduced. This lack of independence can lead to an increased load being placed on a small area of the body (referred to herein as a point load). A point load deforming one of the cells is likely to deform adjacent cells directly or by stressing the unifying layer(s). As a result, the resistance to deflection at the point of contact increases due to the deflection of multiple cells or springs. The increased resistance to deflection may cause pressure points on portions of a user's body that protrude into the cushioning system more than other portions of the user's body (e.g., at a user's shoulders and hips on a mattress).

The disclosed technology includes methods of manufacturing related to a spaced array of individually formed void cells, which are linked together. The void cells are protruding, resiliently compressible cells manufactured by thermoforming, extrusion, injection molding, laminating, and/or blow molding processes. The individual void cells are molded and arranged in an array. A separate, porous binding layer is attached to the individual void cells in the array.

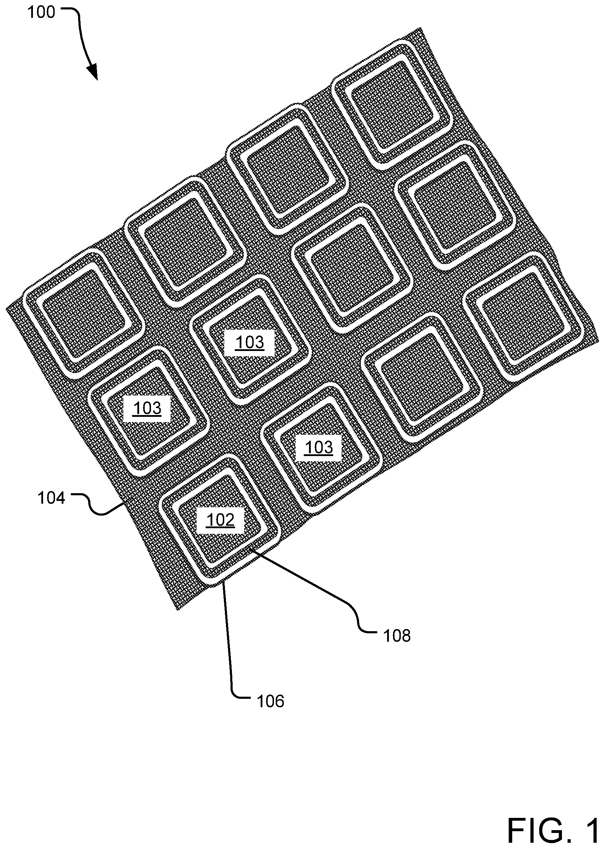

FIG. 1 illustrates a top plan view of an example linked array 100 of individually formed void cells (e.g., void cell 102). The linked array 100 is a spaced array of void cells linked together using a separate binding layer 104.

The binding layer 104 is attached to a supplemental flange (e.g., supplementary flange 108), which is attached to a void cell flange 106. The void cell flange 106 is made of the same material as the void cell and is molded with the void cells. In another implementation, there may be no supplemental flanges and the binding layer 104 may attach directly to the void cell flanges. In FIG.1, the void cells have a square opening with a trapezoidal volume and a rounded top. In other implementations, the void cells may have other shaped openings, volumes, and tops (e.g., a round opening, with a cylindrical-shaped volume, and a square top).

As shown in FIG. 1, the binding layer 104 is a substantially planar layer used to link the void cells together. The binding layer 104 is one continuous sheet of mesh, covering the openings of the individually formed void cells. In another implementation, the binding layer may have holes that cover the openings of the void cells.

Each individually formed void cell is surrounded by neighboring void cells within the linked array 100. For example, void cell 102 is surrounded by three neighboring void cells 103. In the linked array 100, there are three neighboring void cells for each corner void cell, five neighboring void cells for each edge cell, and eight neighboring void cells for the rest of the void cells. Other implementations may have greater or fewer neighboring void cells for each void cell.

In FIG. 1, a single linked array 100 is shown. However, in other implementations, multiple linked arrays may be stacked on top of one another (e.g., two or more linked arrays 100 stacked on top of one another) to achieve intended compression/rebound characteristics of an overall system. Each array may be aligned with another array, the linked individually formed void cells are positioned opposite one another, sharing the same binding layer. In another implementation, multiple matrices, comprising arrays and shared binding layers, can be stacked upon one another. In another implementation, the linked individually formed void cells have substantially different force-deflection characteristics.

The void cell material is generally elastically deformable under expected load conditions and withstands numerous deformations without fracturing or suffering other breakdown impairing the function of the linked array 100. Example materials include thermoplastic urethane, thermoplastic elatomers, styrenic co-polymers, rubber, Dow Pellethane®, Lubrizol Estane®, Dupont™ Hytrel®, ATOFINA Pebax®, and Krayton polymers. Each of the individual void cells may be individually manufactured using a variety of techniques (e.g., blow molding, thermoforming, extrusion, injection molding, laminating, etc.).

The void cells may be unfilled or filled with ambient air, fluid, or foam. The void cells may be of a trapezoidal, cylindrical, cubical, pyramidal, hemispherical-shaped, or any other shaped volume capable of having an interior hollow volume, and round or square tops openings. The wall thickness of each of the void cells may range from 5mm (mil) to 180mm (mil). Further, the wall thickness of each of the void cells may be substantially the same (or vary by no more than 10%) over the surface area of each the void cell. Still further, the size of each of the void cells may range from 5mm to 100mm sides in a cubical implementation. Other shapes may have similar dimensions as the aforementioned cubical implementation. Still further, the void cells may be spaced a variety of distances from one another. An example spacing range is approximately 0mm to 150mm.

The separate binding layer 104 linking the void cells together may be a substantially planar layer used to link the individually formed void cells together. In other implementations, the binding layer has a contoured shape that corresponds to a contoured surface that the linked array 100 is placed adjacent and/or attached to. In various implementations, the binding layer 104 may be constructed with the same potential materials as the void cells (listed above) and/or different potential materials (e.g., textiles, metal screens, etc.). The binding layer 104 may have the same or a different thickness than the void cell wall thickness (e.g., 1mm (mil) - 1000mm (mil)).

The binding layer 104 may be a solid sheet, woven mesh, or perforated sheet. For example, in mesh or perforated sheet implementations, the binding layer 104 may act to link the void cells together while allowing fluid flow through the binding layer 104 of the linked array 100. The binding layer 104 can be one continuous planar sheet, it can be discontinuous, or it can have holes, wherein the binding layer 104 links the void cells together but does not cover the openings of the void cells. In another implementation, the binding layer 104 comprises of binding strips that are positioned between and link the void cells. In an implementation where the linked array 100 is used in conjunction with additional layers in a cushioning system, the mesh or perforated binding layer 104 can substantially prevent collapse of an adjacent array into each of the individual void cells, while still permitting fluid flow through the binding layer.

In various implementations, the binding layer 104 is attached to the void cells via permanent and/or removable connections (e.g., a glued connection, a melted connection, a UV-cured connection, a RF welded connection, a laser-welded connection, another welded connection, a sewn connection, and a hook-and-loop connection). In some implementations, the binding layer 104 and opposing void cells may be pressed together to assist the attachment of the binding layer 104 between opposing void cells. In some implementations, the binding layer 104 and the void cell flanges 106 may be pressed together to assist the attachment of the binding layer 104 to the void cell flanges 106. In some implementations, the void cell flanges 106 are overlapped to tightly pack the void cells in the array 100.

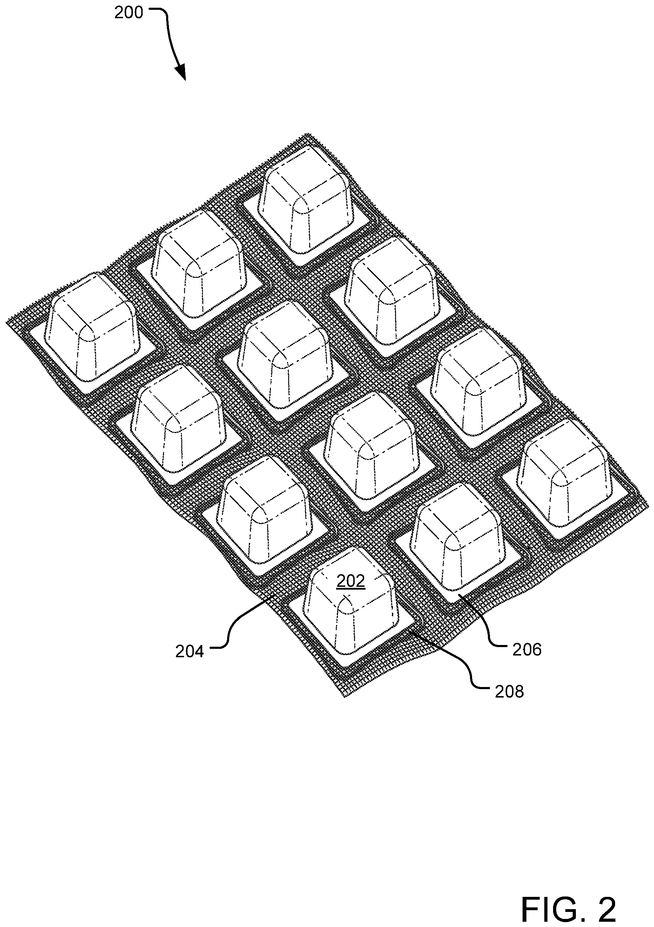

FIG. 2 illustrates a bottom perspective view of an example linked array 200 of individual void cells (e.g., void cell 202). The linked array 200 is a spaced array of void cells linked together using a separate binding layer 204.

Supplemental flanges can be used in conjunction with the flanges formed to each of the void cells. In FIG. 2, the binding layer 204 is attached to a supplemental flange (e.g., supplemental flange 208) which is attached to the void cell flange 206 of each of the void cells. The binding layer 204 may be placed between the supplemental flanges and the void cell flanges to increase the bond between the binding layer 204, the supplemental flanges, and the void cell flanges. To accomplish this arrangement, the binding layer 204 may be compressed between the supplemental flanges and the void cell flanges while a bonding technique is applied (e.g., gluing, a melting, a UV-curing, RF welding, laser-welding, other welding, and sewing) to the linked array 200. In another implementation, there are no supplemental flanges and the binding layer 204 is welded or attached directly to the void cell flange 206.

In the implementation in FIG. 2, void cells have a square opening with a trapezoidal volume and a rounded top. In other implementations, the void cells may have other shaped openings, volumes, and tops (e.g., a round opening, with a cylindrical-shaped volume, and a square top).

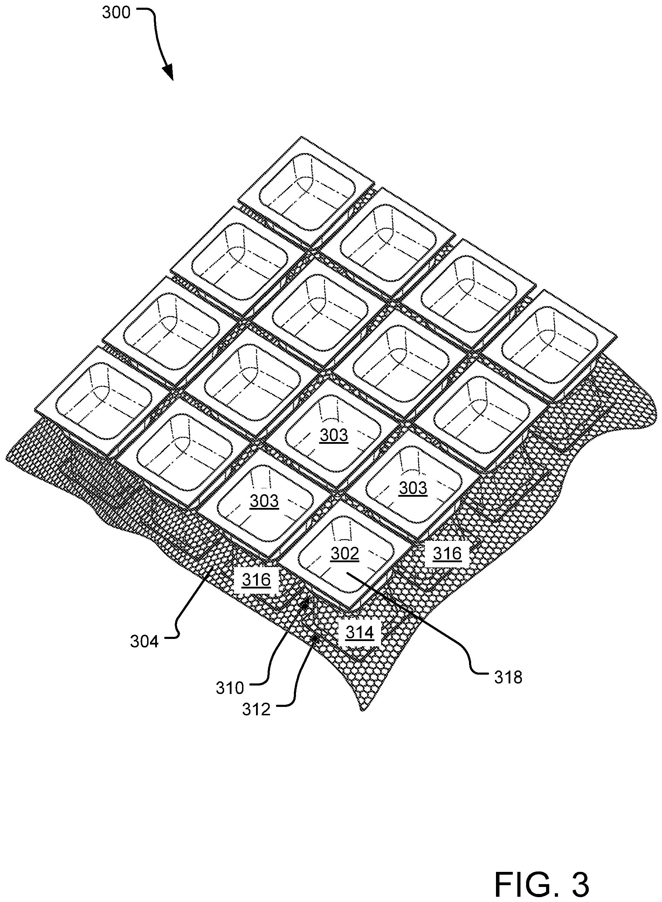

FIG. 3 illustrates a top perspective view of an example linked system 300 of individual opposing void cells (e.g., void cell 302). The void cells in the linked system 300 are arranged in a top array 310 and a bottom array 312. Each array includes an layer of void cells linked together. A common separate binding layer 304 is positioned between each array of void cells and is attached to a peak (e.g., peak 318) of each of the void cells.

The binding layer 304 in FIG. 3 is a substantially planar layer used to link the void cells together. The top array 310 is attached to a top surface of the binding layer 304 and the bottom array 312 is attached to a bottom surface of the binding layer 304. The binding layer 304 links the void cells together while allowing the void cells to deform independently of one another, at least to an extent. In the linked system 300, the void cells in the top array 310 align with the void cells in the bottom array 312, with each void cell in the top array 310 opening away from a corresponding opposing void cell in the bottom array 312. In other implementations, each void cell in the top array 310 opens toward a corresponding opposing void cell in the bottom array 312. In still other implementations, the void cells in the top array 310 are not aligned with the void cells in the bottom array 312. In yet other implementations, the void cells in the top array 310 are a substantially different size and/or shape than the void cells in the bottom array 312.

In FIG. 3, the void cells have a square opening with a trapezoidal volume and a rounded peak. In other implementations, the void cells may have other shaped openings, volumes, and peaks (e.g., a round opening, with a cylindrical-shaped volume and a square peak). Each void cell in the linked system 300 is surrounded by neighboring void cells. For example, void cell 302 is surrounded by three neighboring void cells 303 within the top array 310. In the linked system 300, there are three neighboring void cells for each corner void cell, five neighboring void cells for each edge cell, and eight neighboring void cells for the rest of the void cells. Other implementations may have greater or fewer neighboring void cells for each void cell. Further, each void cell may have a corresponding opposing void cell within an opposite array. For example, void cell 302 in the top array 310 is opposed by void cell 314 in the bottom array 312. Other implementations do not include opposing void cells for some or all of the void cells. Still further, each void cell can have neighbor cells that have opposing cells in an opposite array. For example, void cell 302 in the top array 310 has a neighbor 303, and on opposing cell 316 in the bottom array 312.

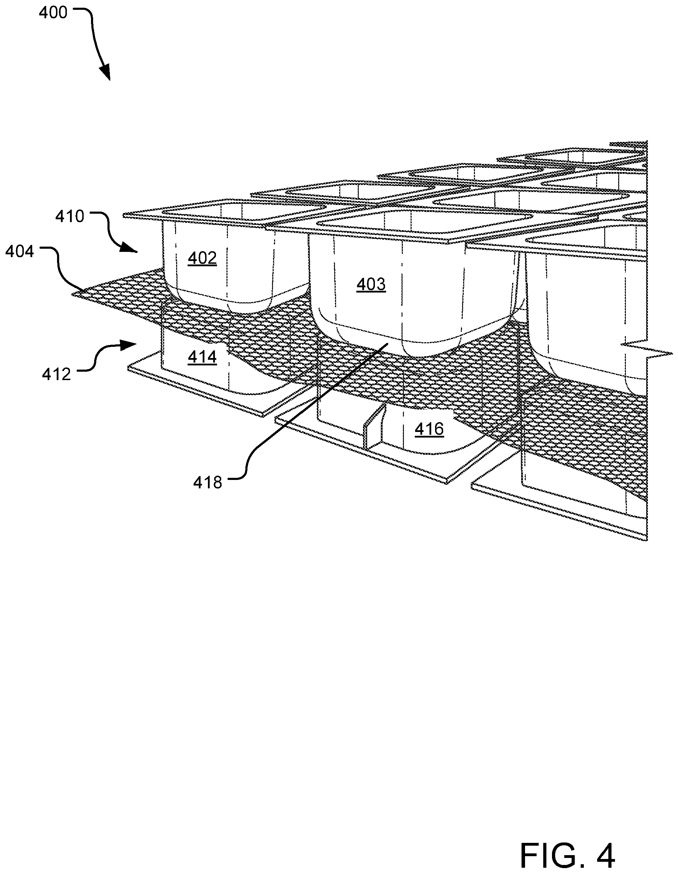

FIG. 4 illustrates a side perspective view of an example linked system 400 of individual opposing void cells (e.g., void cells 414). The void cells in the linked system 400 are arranged in a top array 410 and a bottom array 412. Each array includes an array of void cells linked together using a common separate binding layer 404, which is attached to a peak (e.g., peak 418) of each of the void cells. In the implementation of FIG. 4, the void cells have a square opening with a trapezoidal volume and a rounded peak. In other implementations, the void cells may have other shaped openings, volumes, and peaks (e.g., a round opening, with a cylindrical-shaped volume and a square peak).

Each void cell in the linked system 400 is surrounded by neighboring void cells. For example, void cell 402 is surrounded by neighboring void cells (e.g., void cell 403) within the top array 410. Further, each void cell can have a corresponding opposing void cell within an opposite array. For example, void cell 402 in the top array 410 has a corresponding opposing void cell 414. Still further, each void cell can have neighbor cells that have opposing cells in an opposite array. For example, void cell 402 in the top array 410 has a neighboring void cell 403, which has a corresponding neighbor opposing cell 416 in the bottom array 412.

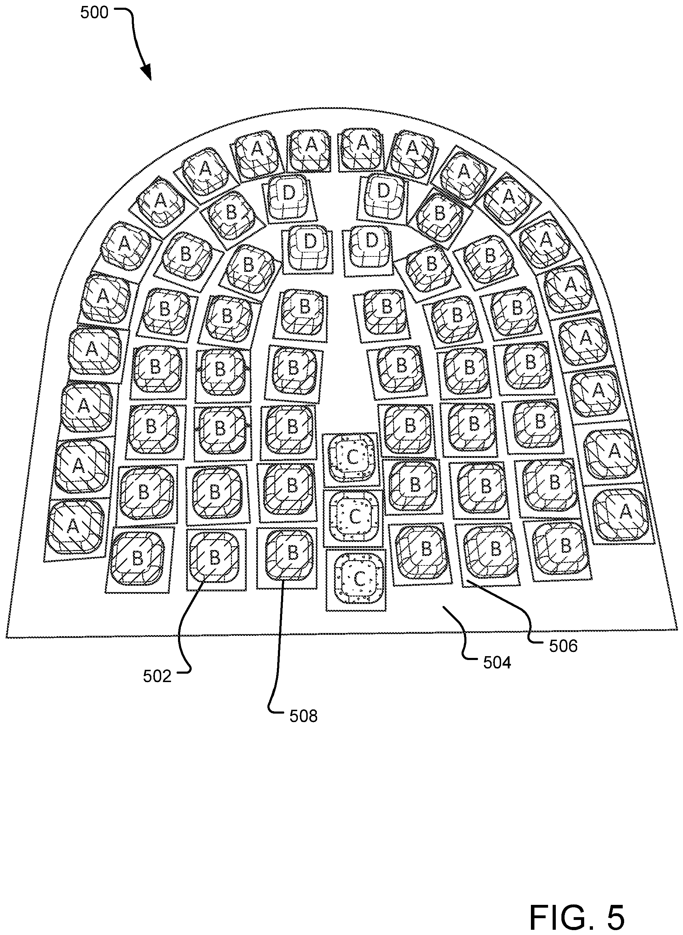

FIG. 5 illustrates a bottom plan view of an example linked array 500 of individual void cells (e.g., void cell 502) having varying force-deflection characteristics. The linked array 500 is a spaced array of individually formed void cells linked together using a separate binding layer 504, which is attached to a flange (e.g., flange 506) of each of the void cells. In FIG. 5, the individual void cells have a square opening with a trapezoidal volume and a rounded top. In other implementations, the void cells may have other shaped openings, volumes, and peaks (e.g., a round opening, with a cylindrical-shaped volume and a square top).

Choice of void cell material, geometry, and/or wall thickness determines the force-deflection characteristics of each void cell. In order to customize the linked array 500 for a particular application where a varied load distribution is expected to be applied to the linked array 500 (e.g., on a seat or mattress), sub-arrays of void cells or individual void cell themselves may be designed to apply different reaction forces. For example, if linked array 500 is used for a seating application, a peak load may occur beneath a user's sit bones or ischial tuberosity. As a result, void cells labeled "A" (e.g., 45mm (mil) thickness) in FIG. 5 may be designed to deflect under lower force (i.e., have a lower reaction force per unit of deflection) than other void cells in the linked array 500. As a result, a user's weight is more evenly distributed over the entire linked array 500. Void cells labeled "B" (e.g., 60mm (mil) thickness) in FIG. 5 may be designed with a higher reaction force per unit of deflection, as the void cells "B" are positioned farther away from the user's sit bones. Void cells labeled "C" (e.g., 70mm (mil) thickness) in FIG. 5 may be designed to an even higher reaction force per unit of deflection than void cells "A" and "B", as void cells "C" are positioned even further away from the user's sit bones. In some implementations, the sub-arrays of void cells or individual void cell themselves are designed with stiffer cells on or near a perimeter of the linked array 500 in order to aid centering of a user sitting or lying on the linked array.

The binding layer 504 is a substantially planar layer used to link the individually formed void cells together. Each void cell is surrounded by a number of neighboring void cells within the linked array 500. For example, void cell 502 is surrounded by five neighboring void cells (e.g., void cells 508). In some implementations, multiple linked arrays may be stacked on top of one another (e.g., two or more linked arrays 500 stacked on top of one another) to achieve intended compression / rebound characteristics of an overall system.

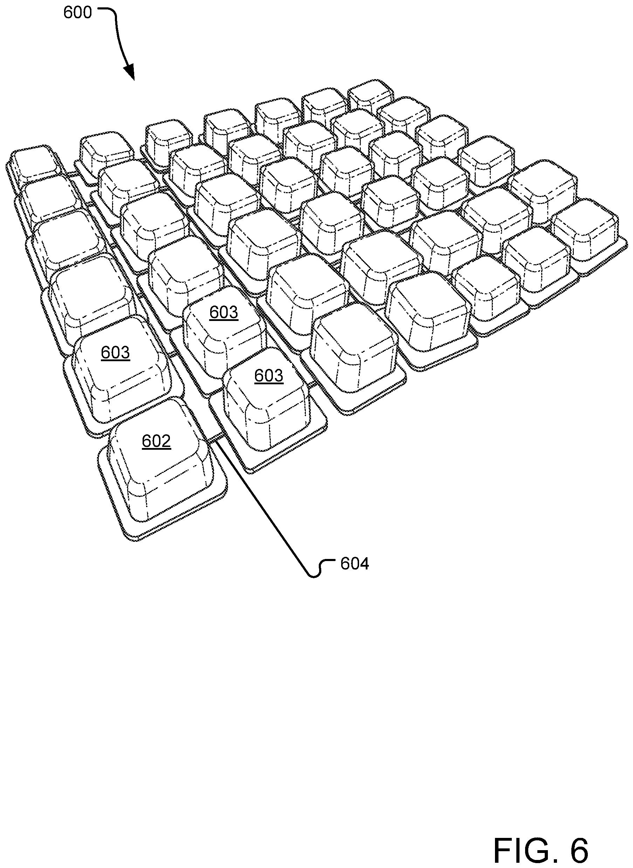

FIG. 6 illustrates a bottom perspective view of an example linked array 600 of individual void cells (e.g., void cell 602). The linked array 600 is a spaced array of void cells linked together using a binding layer, wherein the binding layer comprises binding strips (e.g., binding strips 604). The binding strips 604 link the void cells and allow the linked array 600 to readily conform to a variety of surface contours (e.g., a flat surface, a concave surface, a convex surface, and/or a surface with multiple contours). In some implementations, the binding strips are constructed with the same potential materials as the void cells (listed above) and are formed integrally with the void cells. In other implementations, the binding strips are attached to the void cell flanges or supplemental flanges via permanent and/or removable connections (e.g., a glued connection, a melted connection, a UV-cured connection, a RF welded connection, a laser-welded connection, another welded connection, a sewn connection, and a hook-and-loop connection). The binding strips and the void cell flanges or supplemental flanges may be pressed together to assist the attachment of the binding strips to the void cell flanges. The binding strips may have the same or a different thickness than the void cell wall thickness (e.g., 1mm (mil) - 1000mm (mil)).

In FIG. 6, the void cells have a square flanged opening with a trapezoidal volume and a rounded top. In other implementations, the void cells may have other shaped flanged openings, volumes, and tops (e.g., round flanged opening, with a cylindrical-shaped volume and a square top.).

Each void cell is surrounded by a number of neighboring void cells within the linked array 600. For example, void cell 602 is surrounded by three neighboring void cells (e.g., void cells 603). In other implementations, multiple linked arrays may be stacked on top of one another (e.g., two or more linked arrays 600 stacked on top of one another) to achieve intended compression / rebound characteristics of an overall system.

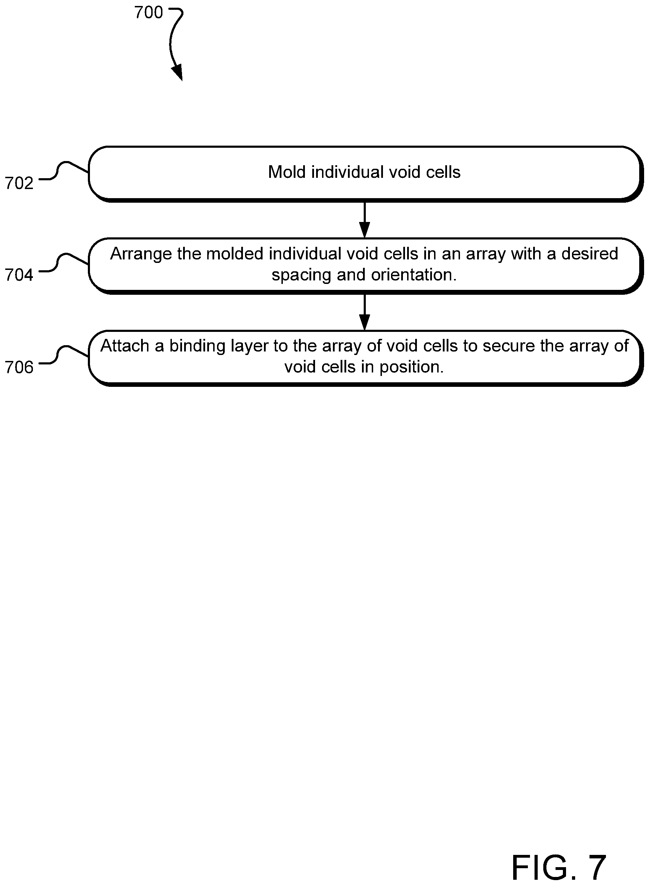

FIG. 7 illustrates example operations 700 for manufacturing a linked array of void cells. A molding operation 702 molds individual void cells and/or sub-arrays of void cells from bulk material. In one implementation, a common void cell geometry is achieved by reusing a mold or set of molds to produce the individual void cells. In other implementations, sub-arrays of void cells with common void cell geometry are produced using the molding operation 702. For example, each void cell within a sub-array has common force-deflection characteristics. The molding operation 702 molds sufficient individual void cells and/or sub-arrays of void cells to produce one or more arrays of void cells.

An arranging operation 704 arranges the molded individual void cells and/or sub-arrays of void cells in an array with a desired spacing and orientation. In one implementation, the individual void cells or subarrays of void cells are flipped to face a common direction (e.g., facing upwards or facing downwards), turned to a common rotational direction (e.g., sides of each individual void cell are arranged parallel to one another), and/or given a desired spacing (e.g., a fixed spacing between the individual void cells or a preselected variable spacing between the individual void cells). In some implementations, a tray with cutouts corresponding to the desired spacing and orientation of the individual void cells or subarrays of void cells is used to achieve the desired spacing and orientation of the individual void cells. In other implementations, pick-and-place robotic technology may be used to automate the arranging operation 704.

An attaching operation 706 attaches a binding layer to the array of void cells to secure the array of void cells in a desired position. The binding layer may take several forms (e.g., a solid planar layer, a perforated planar layer, a mesh layer, and/or individual binding strips). The attaching operation 706 is accomplished by gluing, melting, UV-curing, RF welding, laser-welding, and/or sewing, for example, and may include pressure applied between the array of void cells and the binding layer to assist the attachment of the binding layer to the void cells. In some implementations, the binding layer may be attached to a flange associated with an opening in each of the void cells, a supplemental flange, or at a closed peak of each of the void cells. In implementations where the binding layer is attached to sub-arrays of void cells, the binding layer may not be attached to each individual void cell, but a selection of individual void cells within the sub-array.

The logical operations making up the embodiments of the invention described herein are referred to variously as operations, steps, objects, or modules. Furthermore, it should be understood that logical operations may be performed in any order, adding or omitting operations as desired, unless explicitly claimed otherwise or a specific order is inherently necessitated by the claim language.

The above specification, examples, and data provide a complete description of the structure and use of exemplary embodiments of the invention. Since many embodiments of the invention can be made without departing from the scope of the invention, the invention resides in the claims hereinafter appended. Furthermore, structural features of the different embodiments may be combined in yet another embodiment without departing from the recited claims.

## Claims

1. A method of manufacturing an array of void cells, the method comprising:
molding individual void cells (702);
arranging the individual void cells in an array (704); and
attaching a separate porous binding layer to the individual void cells in the array (706), wherein the separate porous binding layer permits fluid flow between adjacent individual void cells, and wherein a material forming the individual void cells differs from a material forming the separate porous binding layer.

2. The method of claim 1, wherein the individual void cells are molded by one of a thermoforming, extrusion, laminating, blow molding, or injection molding process.

3. The method of any preceding claim, wherein the separate porous binding layer is attached to the individual void cells using one or more of gluing, welding, or stitching.

4. The method of any preceding claim, wherein the separate porous binding layer is attached to the individual void cells via flanges located on the individual void cells.

5. The method of any of claims 1 to 4, wherein the separate porous binding layer is attached via supplemental flanges located on the flanges of the individual void cells.

6. The method of any of claims 1 to 4, further comprising attaching the separate porous binding layer to the individual void cells in the array by pressing the separate porous binding layer and opposing void cells together.

7. The method of any of claims 1 to 4, wherein the separate porous binding layer is attached between the peaks of two opposing individual void cells.

8. An array of void cells (100) comprising:
two or more individually formed void cells; and
a separate porous binding layer (104) attached to the individually formed void cells, wherein
the separate porous binding layer permits fluid flow between two or more adjacent individually formed void cells, and wherein a material forming the two or more individually formed void cells differs from a material forming the separate porous binding layer.

9. The array of void cells of claim 8, wherein the separate porous binding layer is attached via supplemental flanges located on the flanges of the individual void cells.

10. The array of void cells of claim 8 or claim 9, wherein the two or more individually formed void cells comprise of at least one of thermoplastic urethane, thermoplastic elastomers, styrenic co-polymers, and rubber.

11. The array of void cells of any of claims 8 to 10, wherein the array of void cells is stackable.

12. The array of void cells of any of claims 8 to 11, wherein the separate porous binding layer attaches to flanges (106) on the two or more individually formed void cells via a removable connection.

13. The array of void cells of any of claims 8 to 12, wherein at least two of the individually formed void cells have substantially different force-deflection characteristics.

14. The array of void cells of any of claims 8 to 13, wherein each of the two or more individually formed void cells of the first array are aligned with each of two or more individually formed void cells of a second array and each individually formed void cell opens away from a corresponding individually formed void cell.

15. The array of any of claims 8 to 13, wherein each of the two or more individually formed void cells of the first array are aligned with each of two or more individually formed void cells of a second array and each individually formed void cell opens toward a corresponding individually formed void cell.

## Patentansprüche

1. Verfahren zur Herstellung einer Anordnung aus hohlen Zellen, wobei das Verfahren Folgendes umfasst:
Formen einzelner hohler Zellen (702);
Anordnen der einzelnen hohlen Zellen in einer Anordnung (704) und
Anbringen einer separaten porösen Bindeschicht an den einzelnen hohlen Zellen in der Anordnung (706), wobei die separate poröse Bindeschicht einen Fluidfluss zwischen benachbarten einzelnen hohlen Zellen zulässt und wobei ein Material, das die einzelnen hohlen Zellen bildet, sich von einem Material, das die separate poröse Bindeschicht bildet, unterscheidet.

2. Verfahren nach Anspruch 1, wobei die einzelnen hohlen Zellen durch einen von einem Thermoform-, Extrusions-, Laminier-, Blasform- oder Spritzgussvorgang geformt werden.

3. Verfahren nach einem vorhergehenden Anspruch, wobei die separate poröse Bindeschicht an den einzelnen hohlen Zellen unter Verwendung eines oder mehrerer von Kleben, Schweißen oder Nähen angebracht wird.

4. Verfahren nach einem vorhergehenden Anspruch, wobei die separate poröse Bindeschicht an den einzelnen hohlen Zellen mittels Flanschen, die sich an den einzelnen hohlen Zellen befinden, angebracht wird.

5. Verfahren nach einem der Ansprüche 1 bis 4, wobei die separate poröse Bindeschicht mittels ergänzenden Flanschen, die sich an den Flanschen der einzelnen hohlen Zellen befinden, angebracht wird.

6. Verfahren nach einem der Ansprüche 1 bis 4, das weiterhin ein Anbringen der separaten porösen Bindeschicht an den einzelnen hohlen Zellen in der Anordnung durch Zusammendrücken der separaten porösen Bindeschicht und gegenüberliegenden hohlen Zellen umfasst.

7. Verfahren nach einem der Ansprüche 1 bis 4, wobei die separate poröse Bindeschicht zwischen den Scheitelpunkten von zwei gegenüberliegenden einzelnen hohlen Zellen angebracht wird.

8. Anordnung aus hohlen Zellen (100), umfassend:
zwei oder mehr einzeln gebildete hohle Zellen und eine separate poröse Bindeschicht (104), die an den einzeln gebildeten hohlen Zellen angebracht ist, wobei die separate poröse Bindeschicht einen Fluidfluss zwischen zwei oder mehr benachbarten einzeln gebildeten hohlen Zellen zulässt und wobei ein Material, das die zwei oder mehr einzeln gebildeten hohlen Zellen bildet, sich von einem Material, das die separate poröse Bindeschicht bildet, unterscheidet.

9. Anordnung aus hohlen Zellen nach Anspruch 8, wobei die separate poröse Bindeschicht mittels ergänzenden Flanschen, die sich an den Flanschen der einzelnen hohlen Zellen befinden, angebracht wird.

10. Anordnung aus hohlen Zellen nach Anspruch 8 oder 9, wobei die zwei oder mehr einzeln gebildeten hohlen Zellen aus mindestens einem von thermoplastischem Urethan, thermoplastischen Elastomeren, styrolischen Copolymeren und Kautschuk bestehen.

11. Anordnung aus hohlen Zellen nach einem der Ansprüche 8 bis 10, wobei die Anordnung aus hohlen Zellen stapelbar ist.

12. Anordnung aus hohlen Zellen nach einem der Ansprüche 8 bis 11, wobei die separate poröse Bindeschicht sich an Flansche (106) an den zwei oder mehr einzeln gebildeten hohlen Zellen mittels einer abnehmbaren Verbindung anhaftet.

13. Anordnung aus hohlen Zellen nach einem der Ansprüche 8 bis 12, wobei mindestens zwei der einzeln gebildeten hohlen Zellen beträchtlich unterschiedliche Kraftumlenkungscharakteristika aufweisen.

14. Anordnung aus hohlen Zellen nach einem der Ansprüche 8 bis 13, wobei jede der zwei oder mehr einzeln gebildeten hohlen Zellen der ersten Anordnung auf jede von zwei oder mehr einzeln gebildeten hohlen Zellen einer zweiten Anordnung ausgerichtet ist und jede einzeln gebildete hohle Zelle sich von einer entsprechenden einzeln gebildeten hohlen Zelle weg öffnet.

15. Anordnung aus hohlen Zellen nach einem der Ansprüche 8 bis 13, wobei jede der zwei oder mehr einzeln gebildeten hohlen Zellen der ersten Anordnung auf jede von zwei oder mehr einzeln gebildeten hohlen Zellen einer zweiten Anordnung ausgerichtet ist und jede einzeln gebildete hohle Zelle sich zu einer entsprechenden einzeln gebildeten hohlen Zelle hin öffnet.

## Revendications

1. Procédé de fabrication d'un groupement de cellules vides, le procédé consistant à :
mouler des cellules vides individuelles (702) ;
agencer les cellules vides individuelles en un groupement (704) ; et
fixer une couche de liant poreuse séparée sur les cellules vides individuelles dans le groupement (706), dans lequel la couche de liant poreuse séparée permet le passage d'un fluide entre des cellules vides individuelles adjacentes, et dans lequel une matière constituant les cellules vides individuelles est différente d'une matière constituant la couche de liant poreuse séparée.

2. Procédé selon la revendication 1, dans lequel les cellules vides individuelles sont moulées par soit un processus de thermoformage, soit d'extrusion, soit de laminage, soit de moulage par soufflage, soit de moulage par injection.

3. Procédé selon l'une quelconque des revendications précédentes, dans lequel la couche de liant poreuse séparée est fixée sur les cellules vides individuelles en utilisant un ou plusieurs procédés d'encollage, de soudage ou de piqûre.

4. Procédé selon l'une quelconque des revendications précédentes, dans lequel la couche de liant poreuse séparée est fixée sur les cellules vides individuelles au moyen de brides situées sur les cellules vides individuelles.

5. Procédé selon l'une quelconque des revendications 1 à 4, dans lequel la couche de liant poreuse séparée est fixée au moyen de brides complémentaires situées sur les brides des cellules vides individuelles.

6. Procédé selon l'une quelconque des revendications 1 à 4, consistant en outre à fixer la couche de liant poreuse séparée sur les cellules vides individuelles dans le groupement, en appuyant sur la couche de liant poreuse séparée et en opposant les cellules vides les unes par rapport aux autres.

7. Procédé selon l'une quelconque des revendications 1 à 4, dans lequel la couche de liant poreuse séparée est fixée entre les sommets de deux cellules vides individuelles en opposition.

8. Groupement de cellules vides (100) comprenant :
deux ou plusieurs cellules vides individuellement formées ; et
une couche de liant poreuse séparée (104) fixée sur les cellules vides individuellement formées, dans lequel la couche de liant poreuse séparée permet le passage d'un fluide entre deux ou plusieurs cellules vides individuellement formées adjacentes, et dans lequel une matière constituant les deux ou plusieurs cellules vides individuelles formées est différente d'une matière constituant la couche de liant poreuse séparée.

9. Groupement de cellules vides selon la revendication 8, dans lequel la couche de liant poreuse séparée est fixée au moyen de brides complémentaires situées sur les brides des cellules vides individuelles.

10. Groupement de cellules vides selon, soit la revendication 8, soit la revendication 9, dans lequel les deux ou plusieurs cellules vides individuellement formées comprennent au moins soit de l'uréthane thermoplastique, soit des élastomères thermoplastiques, soit des copolymères de styrène soit du caoutchouc.

11. Groupement de cellules vides selon l'une quelconque des revendications 8 à 10, dans lequel le groupement de cellules vides est empilable.

12. Groupement de cellules vides selon l'une quelconque des revendications 8 à 11, dans lequel la couche de liant poreuse séparée est fixée sur des brides (106) sur les deux ou plusieurs cellules vides individuellement formées au moyen d'un raccord amovible.

13. Groupement de cellules vides selon l'une quelconque des revendications 8 à 12, dans lequel au moins deux des cellules vides individuellement formées ont des caractéristiques force-déflection pratiquement différentes.

14. Groupement de cellules vides selon l'une quelconque des revendications 8 à 13, dans lequel chacune des deux ou plusieurs des cellules vides individuellement formées du premier groupement est alignée sur chacune des deux ou plusieurs des cellules vides individuellement formées d'un deuxième groupement, et chaque cellule vide individuellement formée s'ouvre à distance d'une cellule vide individuellement formée correspondante.

15. Groupement selon l'une quelconque des revendications 8 à 13, dans lequel chacune des deux ou plusieurs des cellules vides individuellement formées du premier groupement est alignée sur chacune des deux ou plusieurs des cellules vides individuellement formées d'un deuxième groupement, et chaque cellule vide individuellement formée s'ouvre en direction d'une cellule vide individuellement formée correspondante.
